# EUROPEAN PATENT SPECIFICATION

(11) **EP 3 849 302 B1**
(45) Date of publication and mention of the grant of the patent: **22.06.2022**
(21) Application number: 19765504.6
(22) Date of filing: 12.09.2019
(51) Int. Cl.: A01K 61/60, A01K 61/65

(54) **BOTTOM-FOUNDED SEMI-SUBMERSIBLE SPAR-TYPE OFFSHORE FISH FARM AND METHOD OF INSTALLING THE SAME**
OFFSHORE-FISCHFARM MIT AM BODEN FUNDAMENTIERTEN HALBTAUCHFÄHIGEN HOLMEN UND VERFAHREN ZUR INSTALLATION DAVON
FERME PISCICOLE EN MER SEMI-SUBMERSIBLE DE TYPE ESPAR ÉTABLIE SUR LE FOND ET SON PROCÉDÉ D'INSTALLATION

(30) Priority: 14.09.2018 EP 18194441
(43) Date of publication of application: 21.07.2021
(73) Proprietor: Saulx Offshore, 6221 BT Maastricht (NL)
(72) Inventor: VAN LEEUWEN, Mark Rudolf, 6241 NP Bunde (NL)
(74) Representative: Renkema, Jaap
(86) International application number: PCT/EP2019/074344
(87) International publication number: WO 2020/053331

(56) References cited:
- EP-A1- 2 917 097
- EP-B1- 2 917 097
- WO-A1-99/40780
- CN-U- 205 196 711
- US-A- 3 691 994
- US-A1- 2012 167 829

## Description

### FIELD OF THE INVENTION

The present invention relates to a bottom-founded semi-submersible spar-type offshore fish farm for cultivating fish at locations at sea where a seabed is located in a range of 25m - 50m below sea level. The invention also relates to a method of installing such a fish farm at a farming location.

### BACKGROUND OF THE INVENTION

Aquaculture is the farming of aquatic organisms including fish, mollusks, crustaceans and aquatic plants. Farming implies some form of intervention in the rearing process to enhance production, such as regular stocking, feeding, protection from predators. Aquaculture involves cultivating freshwater and saltwater populations under controlled conditions, and can be contrasted with commercial fishing, which is the harvesting of wild fish. Particular kinds of aquaculture include fish farming, shrimp farming, oyster farming, mariculture, algaculture, and the cultivation of ornamental fish. Fish farming using inshore fish farms in freshwater and offshore fish farms in saltwater is well known. An advantage of known semi-submersible spar-type offshore fish farms is that they can be provided with cages that have large harvesting volumes. As a result, a good farming environment can be provided which is the basis for harvesting highquality cultured fish. To limit exposure of the cages and the stock cultivated within them to harsh sea conditions such cages can be submerged during heavy storms or typhoons. In this way, damage to at least one of the cages, the stock cultivated within them and consequently to the semi-submersible spar-type offshore fish farms as a whole can be limited. Documents US 2012/167829 A1 and US 3 691 994 A disclose this type of fish farms. Document EP 2 917 097 A1 discloses another type of semi-submersible structure.

A disadvantage of the known semi-submersible spar-type offshore fish farms mentioned above is that their installation at so-called shallow farming locations at sea, i.e. at locations where a seabed is located in a range of 25m - 50m below sea level, is an arduous process that involves cumbersome mooring of the fish farm as it among others requires application of long mooring lines, i.e. mooring lines having a length of at least 1.5 km. As this increases the costs for installing the aforementioned known offshore fish farms at the so-called shallow farming locations at sea, the use of this known type of offshore fish farms at such locations is not preferred. Consequently, there is a need to modify said known semi-submersible spar-type offshore fish farms in order to enable using them at shallow farming locations at sea.

### SUMMARY OF THE INVENTION

It is an object of the present invention to provide a bottom-founded semi-submersible spar-type offshore fish farm according to claim 1 for cultivating fish at so-called shallow farming locations at sea, i.e. at locations where a seabed is located in a range of 25m - 50m below sea level, that pre-empts or at least reduces the abovementioned and/or other disadvantages associated with semi-submersible spar-type offshore fish farms known in the art.

It is also an object of the present invention to provide a method according to claim 15 of installing such a bottom-founded semi-submersible spar-type offshore fish farm at a shallow farming location at sea.

Aspects of the present invention are set out in the accompanying independent and dependent claims. Features from the dependent claims may be combined with features from the independent claim as appropriate and not merely as explicitly set out in the claims.

At least one of the abovementioned objects is achieved by a bottom-founded semi-submersible spar-type offshore fish farm for cultivating fish at locations at sea where a seabed is located in a range of 25m - 50m below sea level, comprising an elongated center column comprising a first end part having a cross-section with a first diameter, and a second end part having a cross-section with a second diameter that is larger than the first diameter of the cross-section of the first end part, the second end part being provided with at least one fastening assembly that is configured and arranged to stably associate the second end part of the elongated center column with the seabed at a farming location, an elongated buoyancy sleeve that is coaxially arranged around the elongated center column, the elongated buoyancy sleeve comprising an end portion that is provided with a floater body that is configured and arranged to extend radially outward with respect to the elongated center column and to stabilize said fish farm upon movement of the elongated center column and the elongated buoyancy sleeve relative to each other during installation of said fish farm at the farming location. By providing a bottom-founded semi-submersible spar-type offshore fish farm the use of mooring lines having a length of typically at least 1.5 km can be omitted. This also enables a reduction of the costs for installing this type of offshore fish farms at so-called shallow farming locations at sea, i.e. at locations where a seabed is located in a range of 25m - 50m below sea level. Consequently, the use of semi-submersible spar-type offshore fish farms that are bound to the seabed at shallow farming locations in accordance with the present invention becomes more attractive.

In an embodiment of the bottom-founded semi-submersible spar-type offshore fish farm according to the invention, at least one of the elongated center column, the elongated buoyancy sleeve and the floater body are configured to allow the floater body to either assume a predetermined position along the elongated center column between the first end part and the second end part thereof or to be in an abutting contact with the second end part of the elongated center column depending on a mode of operation of said fish farm. When the second end part of the elongated center column is stably associated with the seabed, the floater body can be positioned at any desired position along the elongated center column between the first end part and the second end part thereof to bring the fish farm into one of a so-called maintenance draft and a feed draft. In the maintenance draft the floater body will be at a position between the first end part and the second end part of the elongated center column that is at sea level. In the feed draft, the floater body will be at a position between the first end part and the second end part of the elongated center column that is below sea level. By arranging the floater body and the second end part of the elongated center column in an abutting contact the bottom-founded fish farm can be brought into a so-called storm draft in which exposure of the bottom-founded fish farm to harsh sea conditions such as heavy storms or typhoons can be reduced. As a result, damage to the bottom-founded fish farm can be limited.

An embodiment of the bottom-founded semi-submersible spar-type offshore fish farm according to the invention comprises a semi-submersible netted rigid cage that is coaxially arranged around the elongated buoyancy sleeve, said cage comprising a first frame that is coaxially arranged around the elongated buoyancy sleeve, a first set of elongated connecting elements, wherein each elongated connecting element of the first set of elongated connecting elements is arranged to interconnect the first frame and the elongated buoyancy sleeve via at least one detachable and pivotable coupling assembly, a second frame that is coaxially arranged around the elongated buoyancy sleeve and, in use of said fish farm, is arranged below the first frame, a second set of elongated connecting elements, wherein each elongated connecting element of the second set of elongated connecting elements is arranged to interconnect the second frame and the floater body of the elongated buoyancy sleeve, and a third set of elongated connecting elements, wherein each elongated connecting element of the third set of elongated connecting elements is arranged to interconnect the first frame and the second frame.

By connecting the elongated connecting elements of the first set of elongated connecting elements with at least one of the elongated buoyancy sleeve and the first frame via detachable and pivotable coupling assemblies, the elongated coupling elements of the first set of elongated connecting elements and at least one of the elongated buoyancy sleeve and the first frame can move relative to each other instead of being fixedly connected. In this way, the connections between the elongated connecting elements of the first set of elongated connecting elements and at least one of the elongated buoyancy sleeve and the first frame have an improved life time due to reduced fatigue because of decreased stress cycles as a result of decreased load variations. The person skilled in the art will appreciate that in another exemplary embodiment of the bottom-founded fish farm the elongated connecting elements of the second set of elongated connecting elements can also be connected with at least one of the second frame and the floater body of the elongated buoyancy sleeve via said detachable and pivotable coupling assemblies. Hence, the abovementioned advantages apply also to the connections between the elongated connecting elements of the second set of elongated connecting elements and at least one of the second frame and the floater body of the elongated buoyancy sleeve.

Furthermore, because of the fact that the pivotable coupling assembly is detachable, the elongated connecting elements of the respective first and second sets of elongated connecting elements can be assembled and disassembled. In this way maintenance of the bottom-founded fish farm can easily be done at the farming location.

In an embodiment of the bottom-founded semi-submersible spar-type offshore fish farm according to the invention, the detachable and pivotable coupling assembly comprises a first part and a second part that are detachably connectable via at least a first coupling element that is arranged to provide a first pivot axis around which the first part and the second part are pivotable with respect to each other. In this way an elongated connecting element of the first set of elongated connecting elements, in use of the bottom-founded fish farm, is pivotable with respect to at least one of the elongated buoyancy sleeve and the first frame in radial directions of the elongated center column. Likewise, an elongated connecting element of the second set of elongated connecting elements, in use of the bottom-founded fish farm, is pivotable with respect to at least one of the second frame and the floater body of the elongated buoyancy sleeve in radial directions of the elongated center column. The person skilled in the art will appreciate that the first coupling element can be any suitable coupling element that can provide the first pivot axis that enables the abovementioned pivoting movements of the first part and the second part of the detachable and pivotable coupling assembly. The person skilled in the art will appreciate that the detachable and pivotable coupling assembly can comprise more than one first parts and more than one second parts depending on the requirements for the bottom-founded fish farm, e.g. for the sake of redundancy to improve reliability.

In an embodiment of the bottom-founded semi-submersible spar-type offshore fish farm according to the invention, at least one of the first part and the second part of the detachable and pivotable coupling assembly is provided with at least a second coupling element that is arranged to provide a second pivot axis that is directed transversely with respect to the first pivot axis. By providing the second coupling element, an elongated connecting element of the first set of elongated connecting elements, in use of the bottom-founded fish farm, is also pivotable with respect to the elongated buoyancy sleeve in circumferential directions of the elongated center column. Hence, an elongated connecting element of the first set of elongated connecting elements can, in use of the bottom-founded fish farm, move with respect to the elongated buoyancy sleeve in orthogonal directions, e.g. in radial directions and in circumferential directions of the elongated center column. The movements in radial and circumferential directions of the elongated center column can also be referred to as movements in pitch and yaw. These directions of movement are the most important directions regarding improvement of the life time of the connections between the elongated connecting elements of the first set of elongated connecting elements and the elongated buoyancy sleeve. An analogous reasoning holds for the elongated connecting elements of the second set of elongated connecting elements that are pivotable with respect to the floater body of the elongated buoyancy sleeve in both radial and circumferential directions of the elongated center column.

The person skilled in the art will appreciate that the second coupling element can be any suitable coupling element that can provide a second pivot axis that is directed transversely with respect to the first pivot axis and that enables the abovementioned movements of the elongated connecting elements of the first set of elongated connecting elements and the elongated buoyancy sleeve, and the elongated connecting elements of the second set of elongated connecting elements and the floater body of the elongated buoyancy sleeve.

In an embodiment of the bottom-founded semi-submersible spar-type offshore fish farm according to the invention, at least one of the first frame comprises a first set of frame sections that are connected to each other to form a first closed structure and the second frame comprises a second set of frame sections that are connected to each other to form a second closed structure. In this way at least one of the respective first and second frames can be assembled and disassembled. As a result, maintenance of the bottom-founded fish farm can easily be done at the farming location.

In an embodiment of the bottom-founded semi-submersible spar-type offshore fish farm according to the invention, at least one of the first frame and the second frame have buoyant properties and have one of a circular and polygonal shape. By providing at least one of the first frame and the second frame with buoyant properties, they can carry at least their own weight. The person skilled in the art will appreciate that the buoyant properties can be provided in any suitable way, e.g. by using a tubular lattice structure for at least one of the first frame and the second frame.

In an embodiment of the bottom-founded semi-submersible spar-type offshore fish farm according to the invention, the first part of the detachable and pivotable coupling assembly is arranged at least at one of a surface of the elongated buoyancy sleeve that in use of said fish farm faces away from the elongated center column, and a surface of at least one frame section of the first set of frame sections of the first frame. The person skilled in the art will appreciate that the first part of the detachable and pivotable coupling assembly can be arranged at any desired location depending on specific design requirements for the bottom-founded semi-submersible spar-type offshore fish farm.

In an embodiment of the bottom-founded semi-submersible spar-type offshore fish farm according to the invention, the second part of the detachable and pivotable coupling assembly is arranged at least at one end part of an elongated connecting element of the first set of elongated connecting elements. The person skilled in the art will appreciate that if for example the elongated connecting elements of the first set of elongated connecting elements are provided with second parts of the detachable and pivotable coupling assembly at both of their respective end parts, and the elongated buoyancy sleeve and the frame sections of the first set of frame sections of the first frame are provided with first parts of the detachable and pivotable coupling assembly, upon assembly, the detachable and pivotable coupling assemblies interconnect the elongated connecting elements of the first set of elongated connecting elements with both the elongated buoyancy sleeve and the frame sections of the first set of frame sections of the first frame.

Analogously, the detachable and pivotable coupling assemblies can be used to interconnect elongated connecting elements of the second set of elongated connecting elements with at least one of the floater body of the elongated buoyancy sleeve and at least one frame section of the second set of frame sections of the second frame. The person skilled in the art will appreciate that many more configurations are conceivable depending on the requirements for the semi-submersible spar-type offshore fish farm.

In an embodiment of the bottom-founded semi-submersible spar-type offshore fish farm according to the invention, the elongated connecting elements of at least one of the first set of elongated connecting elements and the second set of elongated connecting elements have a tubular lattice structure. In this way, the elongated connecting elements can carry at least their own weight and the weight of the respective first and second frames of the semi-submersible netted rigid cage.

In an embodiment of the bottom-founded semi-submersible spar-type offshore fish farm according to the invention, said fish farm is provided with at least one of a first platform that, in use of said fish farm, is arranged adjacent to the elongated center column and a second platform that is connected with the first frame. The first platform and the second platform can be used by operators of the bottom-founded fish farm. The first platform and the second platform can be interconnected by at least one walkway that can be arranged on an elongated connecting element of the first set of elongated connecting elements. The person skilled in the art will appreciate that the walkway can be configured and arranged in any suitable way to interconnect the first platform and the second platform.

In an embodiment of the bottom-founded semi-submersible spar-type offshore fish farm according to the invention, the first frame is provided with a first net that, in use of said fish farm, provides a top net of the semi-submersible netted rigid cage, the first frame and the second frame are further interconnected via a second net that, in use of said fish farm, provides a circumferential side net of said cage, and wherein the second frame is provided with a third net that, in use of said fish farm, provides a bottom net of said cage.

In an embodiment of the bottom-founded semi-submersible spar-type offshore fish farm according to the invention, the at least one fastening assembly comprises at least one of a suction anchor and a pre-piling template. The person skilled in the art will be familiar with suction anchors and pre-piling templates that can be associated with pre-drilled piles as these techniques are commonly used for associating bottom-founded off-shore structures to the seabed. In an exemplary embodiment of the bottom-founded fish farm only suction cans are used to associate the second end part of the elongated center column with the seabed. In another exemplary embodiment of the bottom-founded fish farm, only pre-piling templates are used to associate the second end part of the elongated center column with the seabed. In yet another exemplary embodiment of the bottom-founded fish farm, a combination of suction cans and pre-piling templates may be used. The specific embodiment required will among others depend on the specific characteristics of the seabed at the desired farming location.

In an embodiment of the bottom-founded semi-submersible spar-type offshore fish farm according to the invention, the semi-submersible spar-type offshore fish farm comprises at least one of a harvest system, a power system, a mooring system, a boat landing system, a docking system, a dead fish removal system and a feeding system. The person skilled in the art will appreciate that the bottom-founded fish farm according to the invention is a versatile and self-sufficient fish farm.

According to another aspect the present invention provides a method of installing a bottom-founded semi-submersible spar-type offshore fish farm for cultivating fish at locations where a seabed is located in a range of 25m - 50m below sea level according to the invention, comprising the steps of positioning said fish farm of which the floater body of the elongated buoyancy sleeve and the second end part of the elongated center column are in an abutting contact at a farming location, moving the elongated center column and the elongated buoyancy sleeve relative to each other to bring the second end part of the elongated center column into abutting contact with the seabed at the farming location, associating the second end part of the elongated center column with the seabed at the farming location using at least one fastening assembly, and wherein during the steps of bringing the second end part of the elongated center column into abutting contact with the seabed and associating the second end part with the seabed, the floater body remains located at sea level to stabilize said fish farm. The person skilled in the art will appreciate that the method of installing the bottom-founded fish farm enables a less complicated installation process as the floater body of the elongated buoyancy sleeve stabilizes the bottom-founded fish farm while the second end part of the elongated center column is lowered towards the seabed and while it is attached to the seabed via the at least one fastening assembly that is provided at the second end part of the elongated center column. Furthermore, once the second end part of the elongated center column is attached with the seabed, the elongated center column provides stability to the bottom-founded fish farm upon moving the elongated buoyancy sleeve with respect to the elongated center column in order to bring the fish farm in a farming condition. Based on the foregoing, the person skilled in the art will appreciate that the method of installing the bottom-founded semi-submersible spar-type offshore fish farm according to the invention enables the bottom-founded fish farm to be installed in a self-installing way.

### BRIEF DESCRIPTION OF THE DRAWINGS

Further features and advantages of the invention will become apparent from the description of the invention by way of exemplary and non-limiting embodiments of a bottom-founded semi-submersible spar-type offshore fish farm that can be installed using the method according to the present invention.

The person skilled in the art will appreciate that the described embodiments are exemplary in nature only and not to be construed as limiting the scope of protection in any way. The person skilled in the art will realize that alternatives and equivalent embodiments of the bottom-founded fish farm can be conceived and reduced to practice without departing from the scope of protection of the present invention.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1A shows a schematic side view of an exemplary, non-limiting embodiment of a bottom-founded semi-submersible spar-type offshore fish farm according to the invention when being in a so-called tow draft;
figure 1B shows a schematic side view of the exemplary, non-limiting embodiment of the bottom-founded semi-submersible spar-type offshore fish farm shown in figure 1A when being in a so-called installation draft;
figure 1C shows a schematic side view of the exemplary, non-limiting embodiment of the bottom-founded semi-submersible spar-type offshore fish farm shown in figures 1A and 1B when being in a so-called maintenance draft;
figure 1D shows a schematic side view of the exemplary, non-limiting embodiment of the bottom-founded semi-submersible spar-type offshore fish farm shown in figures 1A-1C when being in a so-called feed draft;
figure 1E shows a schematic side view of the exemplary, non-limiting embodiment of the bottom-founded semi-submersible spar-type offshore fish farm shown in figures 1A-1D when being in a so-called storm draft;
figure 2 shows a schematic perspective view of an upper part of the bottom-founded semi-submersible spar-type offshore fish farm according to the exemplary, non-limiting embodiment shown in figures 1A-1E;
figure 3 shows a schematic top view of an exemplary, non-limiting embodiment of the second frame, a third net that is used as a bottom net of the semi-submersible rigid cage, the floater body and the elongated buoyancy sleeve of the bottom-founded semi-submersible spar-type offshore fish farm according to the exemplary, non-limiting embodiment shown in figures 1A-1E;
figure 4A shows a schematic perspective view of an exemplary, non-limiting embodiment of a detachable and pivotable coupling assembly;
figure 4B shows a schematic side view of the exemplary, non-limiting embodiment of the detachable and pivotable coupling assembly shown in figure 4A;
figure 5 shows a schematic perspective view of an exemplary, non-limiting embodiment of a connection of two frame sections of a first set of frame sections of the first frame of the semi-submersible netted rigid cage of the bottom-founded semi-submersible spar-type fish farm according to the invention; and
figure 6 shows a schematic perspective view of an exemplary, non-limiting embodiment of a connection of two frame sections of a second set of frame sections of the second frame of the semi-submersible netted rigid cage of the bottom-founded semi-submersible spar-type fish farm according to the invention.

### DETAILED DESCRIPTION OF EMBODIMENTS

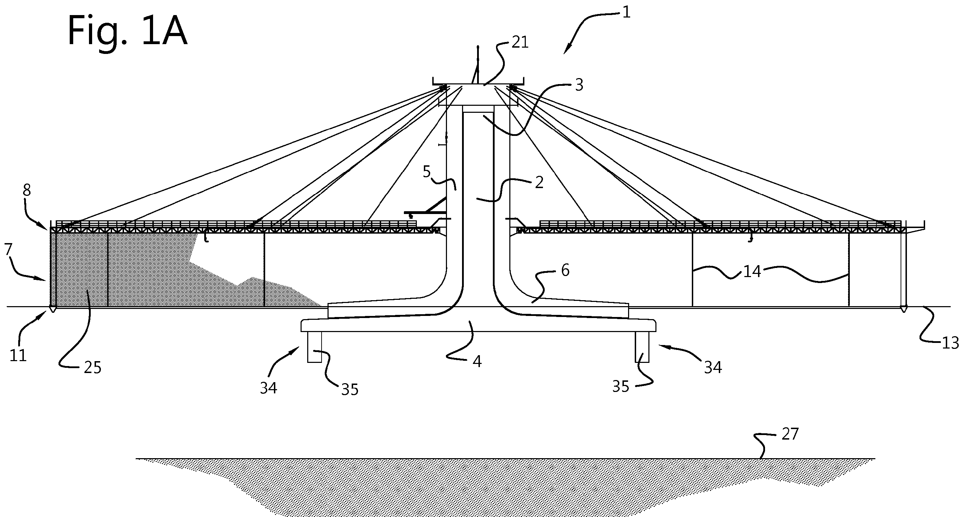

Figure 1A shows a schematic side view of an exemplary, non-limiting embodiment of a bottom-founded semi-submersible spar-type offshore fish farm 1 according to the invention when being in a so-called tow draft. In this draft the bottom-founded fish farm 1 can be towed from the yard where the bottom-founded fish farm 1 has been assembled to a desired so-called shallow farming location at sea, i.e. a location where a seabed 27 is located in a range between 25m - 50m below sea level 13. The bottom-founded fish farm 1 comprises an elongated center column 2 that has a first end part 3 having a cross-section with a first diameter and a second end part 4 having a cross-section with a second diameter that is larger than the first diameter of the cross-section of the first end part 3. The elongated center column 2 in the embodiment shown in figure 1A has a circular cross-section. However, the person skilled in the art will appreciate that the cross-section of the elongated center column can have any suitable cross-section. The second end part 4 is provided with at least one fastening assembly 34 that is configured and arranged to stably associate the second end part 4 of the elongated center column 2 with the seabed 27 at the desired farming location.

In the exemplary embodiment of the bottom-founded semi-submersible spar-type offshore fish farm 1 shown in figure 1A, two fastening assemblies 34 are shown. In this case the fastening assemblies are suction anchors 35. In another exemplary embodiment the fastening assemblies could comprise pre-piling templates (not shown) that can be associated with pre-drilled piles (not shown) for associating the bottom-founded fish farm 1 to the seabed 27. The person skilled in the art will appreciate that in yet another exemplary embodiment of the bottom-founded fish farm 1, a combination of suction cans 35 and pre-piling templates may be used. The specific embodiment of the fastening assemblies that is required will among others depend on the specific characteristics of the seabed at the desired farming location.

Figure 1A further shows that the bottom-founded fish farm 1 comprises an elongated buoyancy sleeve 5 that is coaxially arranged around the elongated center column 2. The elongated buoyancy sleeve 5 comprises an end portion that is provided with a floater body 6 that extends radially outward with respect to the elongated center column 2. The floater body 6 is configured and arranged to stabilize the bottom-founded fish farm 1 when it is in the tow draft and upon movement of the elongated center column 2 and the elongated buoyancy sleeve 5 relative to each other during installation of the fish farm 1 at the farming location. In the tow draft of the fish farm 1 that is shown in figure 1A, the floater body 6 is at sea level 13 and the floater body 6 and the second end part 4 of the elongated center column 2 are in an abutting contact. In this way stable transport of the fish farm is enabled when the fish farm is towed for example from the yard where the fish farm was built to a desired farming location.

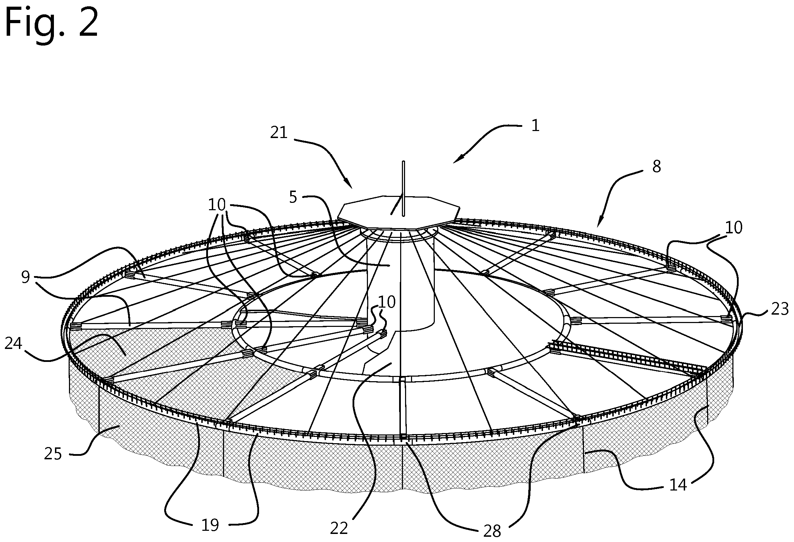

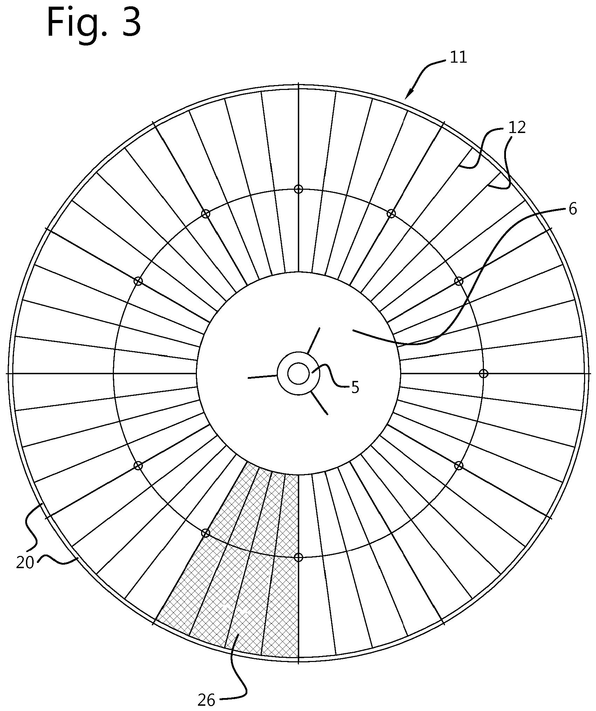

Figure 1A also shows that the bottom-founded semi-submersible spar-type offshore fish farm 1 comprises a semi-submersible netted rigid cage 7 that is coaxially arranged around the elongated buoyancy sleeve 5. The semi-submersible netted cage 7 of the bottom-founded fish farm 1 can have a diameter in a range between 80m and 180m. The cage 7 comprises a first frame 8 that is coaxially arranged around the elongated buoyancy sleeve 5. The first frame 8 is interconnected with the elongated buoyancy sleeve 5 via a first set of elongated connecting elements 9 that are shown in figure 2. The cage 7 also comprises a second frame 11 that is coaxially arranged around the elongated buoyancy sleeve 5 and is arranged below the first frame 8. The second frame 11 is interconnected with the floater body 6 of the elongated buoyancy sleeve 5 via a second set of elongated connecting elements 12 that are shown in figure 3. Figure 1A also shows that a third set of elongated connecting elements 14 is provided. Each elongated connecting element of the third set of elongated connecting elements 14 is arranged to interconnect the first frame 8 and the second frame 11. The elongated connecting elements of the third set of elongated connecting elements 14 can be flexible elements such as chains of metal or any other suitable material such as fiber-enforced resilient material.

Furthermore, figure 1A shows that an end portion of the elongated buoyancy sleeve 5 is provided with a control facility 21 that in use of the fish farm 1 remains positioned above sea level. The control facility 21 comprises an equipment room and a residence room or living quarter for operators of the fish farm 1. The person skilled in the art will appreciate that the control facility can comprise any system or equipment that is suitable to be located therein and that is required for the operation of the bottom-founded semi-submersible spar-type fish farm 1. Examples of such systems or equipment, which are not explained in further detail and are not shown in the appended figures, are power systems, generators, e.g. solar generators, switch boards, systems related to the fuel tanks and the oil tanks, piping systems, cable systems, and fish farming supporting systems such as CCTV (above and below sea level), communication systems comprising for example radio devices, GPS, a radar system, a telephone system, a broadcasting system and an alarm system. Figure 1A also shows a helicopter landing platform that is provided on the roof of the control facility 21.

Although not explained in further detail nor shown in the appended figures, the person skilled in the art will also appreciate that the bottom-founded semi-submersible spar-type offshore fish farm 1 can comprise at least one of a harvesting system, a mooring system, a boat landing system, a docking system, a dead fish removal system and a feeding system.

Furthermore, the person skilled in the art will appreciate that although not explicitly described in further detail nor shown in the appended figures, the elongated buoyancy sleeve 5 can comprise at least one of ballast/de-ballast pumps, piping systems, ventilation systems, valve systems, level gaging systems and air compressors that in use of the fish farm enable ballasting or de-ballasting operations for allowing the elongated buoyancy sleeve 5 of the fish farm 1 to float upwards or to dive downwards. In case the elongated buoyancy sleeve 5 is naturally buoyant, there is no need for a separate ballasting system in the elongated buoyancy sleeve 5 other than mobile deep well pumps.

The person skilled in the art will appreciate that the elongated buoyancy sleeve 5 and the elongated center column 2 are movable with respect to each other in any suitable way, for example in a sliding manner under the influence of a displacement system. The displacement system can comprise a winch. Furthermore, the person skilled in the art will appreciate that it can be advantageous if at least one of the elongated buoyancy sleeve 5 and the elongated center column 2 is provided with pads comprising a material, e.g. polytetrafluoroethylene (PTFE), that enhances sliding of the elongated buoyancy sleeve 5 along the elongated center column 2.

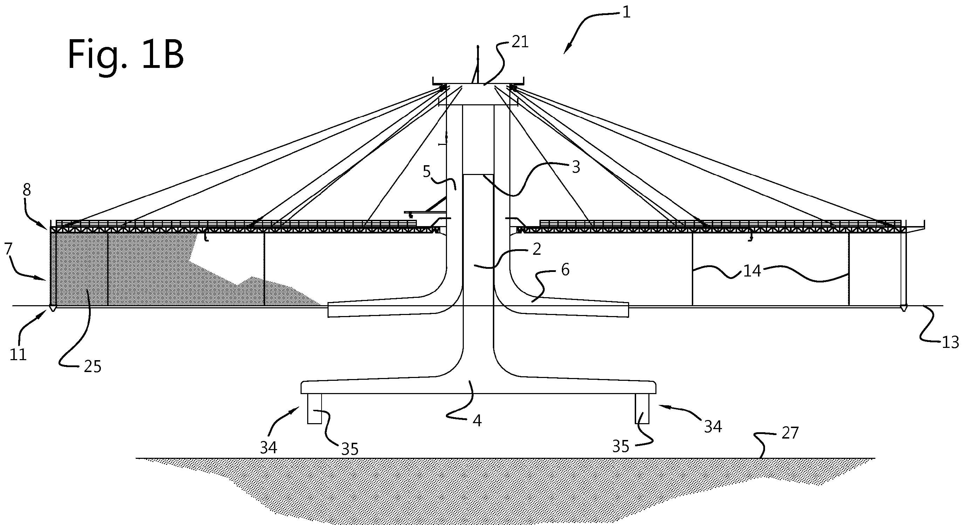

Figure 1B shows a schematic side view of the exemplary, non-limiting embodiment of the bottom-founded semi-submersible spar-type offshore fish farm 1 shown in figure 1A when being in a so-called installation draft. When the fish farm 1 has reached the desired farming location, movement of the elongated center column 2 relative to the elongated buoyance sleeve 5 allows lowering of the second end part 4 of the elongated center column 2 towards the seabed 27 in order to subsequently associate the second end part 4 of the elongated center column with the seabed 27 via the suction cans 35. During the aforementioned steps of the installation process of the fish farm 1, the floater body 6 remains at sea level 13 in order to stabilize the fish farm 1.

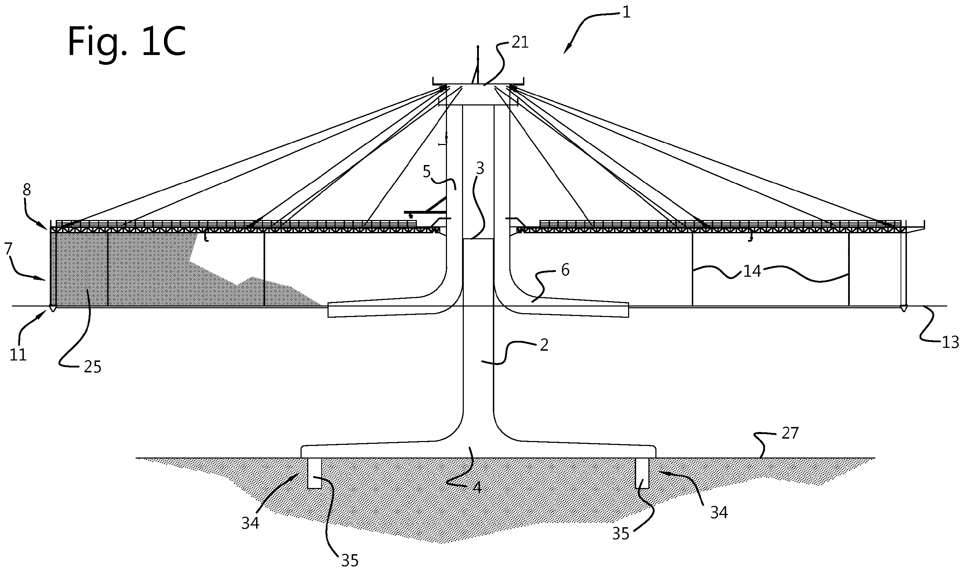

Figure 1C shows a schematic side view of the exemplary, non-limiting embodiment of the bottom-founded semi-submersible spar-type offshore fish farm 1 shown in figures 1A and 1B when being in a so-called maintenance draft. In this draft the floater body 6 of the elongated buoyancy sleeve 5 is positioned at sea level 13 in order to raise the semi-submersible netted rigid cage 7 above sea level. In this way maintenance of the cage can be performed more easily as the maintenance work can be performed at or above sea level. The person skilled in the art will appreciate that the elongated center column 2 that is stably associated with the seabed 27 provides stability to the fish farm 1 when it is in the maintenance draft shown in figure 1C. Moreover, the elongated center column 2 that is stably associated with the seabed 27 provides stability to the fish farm 1 during any movement of the elongated buoyancy sleeve 5 along it.

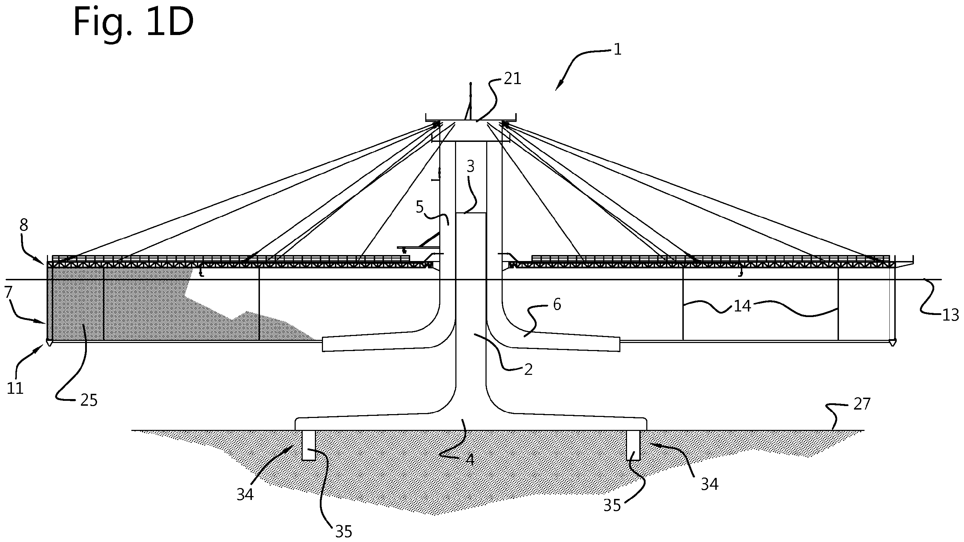

Figure 1D shows a schematic side view of the exemplary, non-limiting embodiment of the bottom-founded semi-submersible spar-type offshore fish farm 1 shown in figures 1A-1C when being in a so-called feed draft. In this draft the floater body 6 of the elongated buoyancy sleeve 5 is positioned between the first end part 3 and the second end part 4 of the elongated center column 2 such that the largest part of the semi-submersible netted rigid cage 7 as seen in an axial direction of the elongated center column 2 is below sea level 13. The fish farm 1 is brought into the feed draft to feed the stock that is cultivated in the cage 7. Also in the feed draft, the elongated center column 2 provides stability to the bottom-founded fish farm 1.

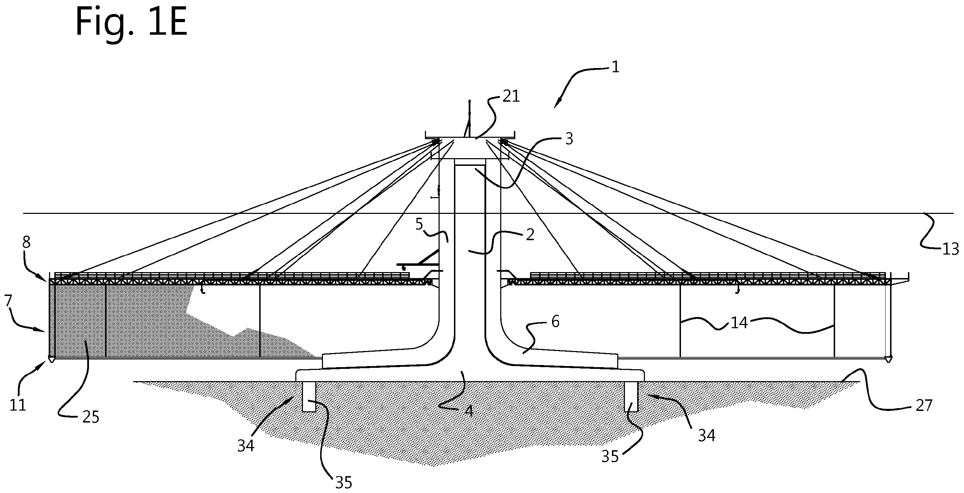

Figure 1E shows a schematic side view of the exemplary, non-limiting embodiment of the bottom-founded semi-submersible spar-type offshore fish farm 1 shown in figures 1A-1D when being in a so-called storm draft. The person skilled in the art will appreciate that it depends on the actual sea conditions if it is possible to position the semi-submersible netted rigid cage 7 partially above sea level, as is the case in the abovementioned feed draft, or to position it entirely, or almost entirely, above sea level, as is the case in the abovementioned maintenance draft. When heavy storms or typhoons are expected the semi-submersible netted rigid cage 7 is advantageously positioned completely below sea level 13 in order to minimize any negative effects of the sea conditions on the cage 7, the stock, e.g. fish, that is contained within it and the fish farm as a whole. As can be seen from figure 1E, the fish farm 1 can be brought in the storm draft by arranging the floater body 6 of the elongated buoyancy sleeve 5 in an abutting contact with the second end part 4 of the elongated center column 2. As a result, the semi-submersible netted rigid cage 7 is positioned completely below sea level 13.

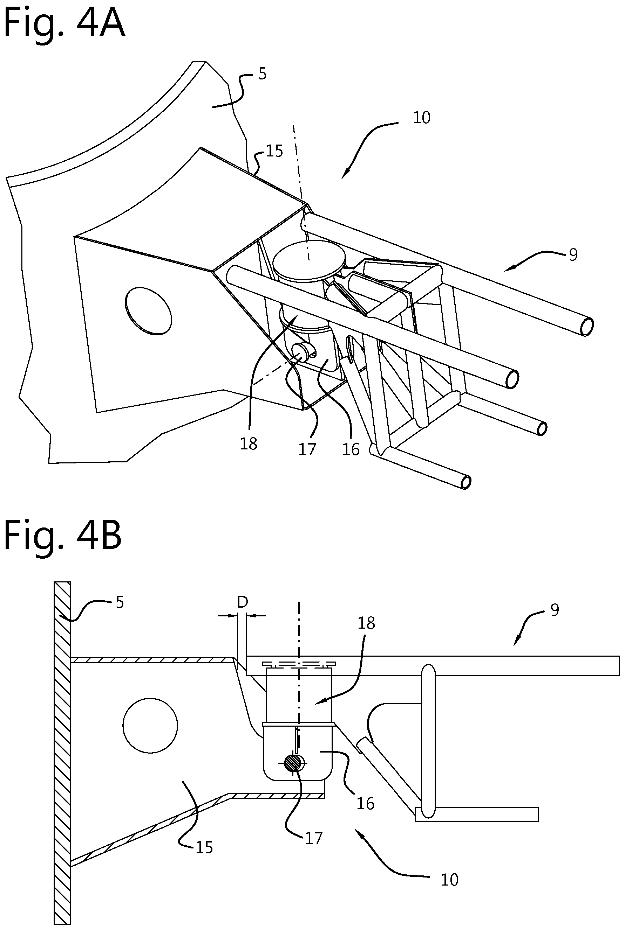

Figure 2 shows a schematic perspective view of an upper part of the bottom-founded semi-submersible spar-type offshore fish farm 1 according to the exemplary, non-limiting embodiment shown in figures 1A-1E. As is shown in figure 2, each elongated connecting element of the first set of elongated connecting elements 9 is arranged to interconnect the first frame 8 and the elongated buoyancy sleeve 5 via at least one detachable and pivotable coupling assembly 10 that will be explained in further detail in relation to figures 4A and 4B.

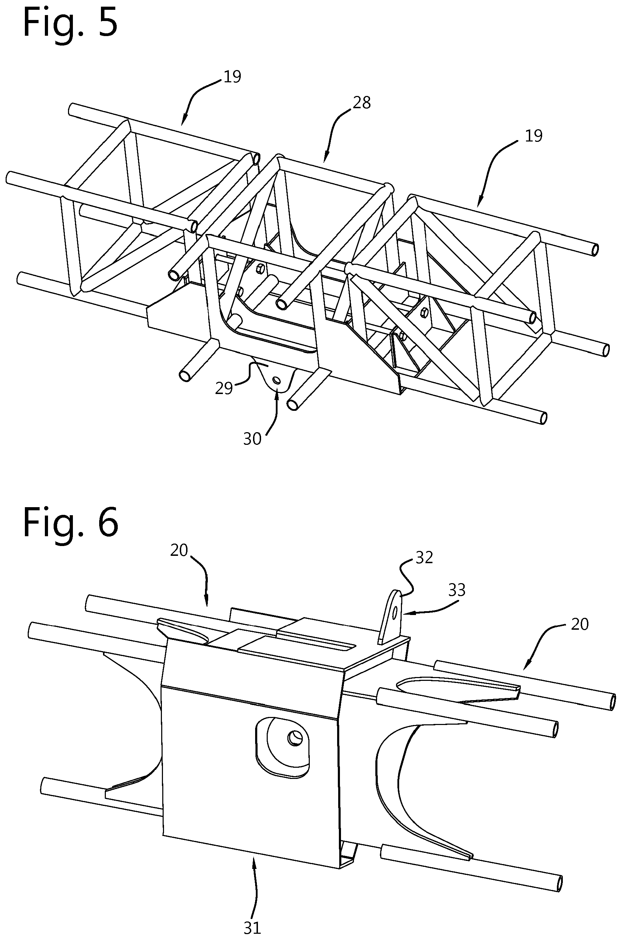

Figure 2 shows that the first frame 8 comprises a first set of frame sections 19 that are connected to each other to form a first closed structure. The first frame 8 has buoyant properties and has a circular shape. The buoyant properties can be provided in any suitable way, for example by using a tubular lattice structure for the frame sections of the first set of frame sections 19 of the first frame 8. This is explained further in relation to figure 5. To provide the elongated connecting elements of the first set of elongated connecting elements 9 with buoyant properties they have a tubular lattice structure. This is explained further in relation to figures 4A and 4B. In this way, the elongated connecting elements are configured to carry at least their own weight and at least part of the weight of at least one of the nets of the semi-submersible netted rigid cage 7 that are connected to them and the respective first frame 8 and the second frame 11 of the semi-submersible netted rigid cage 7. Figures 1A-1E and figure 2 also show that for the sake of stability of the semi-submersible netted rigid cage 7, a plurality of guy ropes, e.g. steel wire ropes, is provided that are arranged to interconnect the first frame 8 and the control facility 21.

Figure 2 shows that the exemplary, non-limiting embodiment of the bottom-founded semi-submersible spar-type offshore fish farm 1 is provided with a first platform 22 that is arranged adjacent to the elongated center column 2 and a second platform 23 that is connected with the first frame 8. The first platform 22 and the second platform 23 can be used by operators of the fish farm. The first platform 22 and the second platform 23 are interconnected by a walkway that is arranged on an elongated connecting element of the first set of elongated connecting elements 9.

Figure 2 shows that the first frame 8 is provided with a first net 24 that is used as a top net of the semi-submersible netted rigid cage 7. Although in figure 2 the first net 24 is only partially shown, the person skilled in the art will appreciate that in order to be able to position the cage 7 completely below sea level, the first net 24 will have to completely cover any spaces between at least one of the first frame 8, the elongated connecting elements of the first set of elongated connecting elements 9, the first platform 22 and the elongated buoyancy sleeve 5 via which the stock in the cage 7 could escape.

Figure 2 also shows a part of a second net 25 that as shown in figures 1A-1E is arranged to interconnect the first frame 8 and the second frame 11. The second net 25 provides a circumferential side net of the cage 7. Figure 3 shows that the second frame 11 is provided with a third net 26 that is used as a bottom net of the cage 7. The person skilled in the art will appreciate that each one of the nets 24, 25, and 26 can comprise one or more parts depending on the specific requirements of the fish farm.

Figure 3 shows a schematic top view of an exemplary, non-limiting embodiment of the second frame 11, the third net 26 that is used as a bottom net of the semi-submersible rigid cage 7, the floater body 6 and the elongated buoyancy sleeve 5 of the bottom-founded semi-submersible spar-type offshore fish farm 1 according to the exemplary, non-limiting embodiment shown in figures 1A-1E. As is shown in figure 3, each elongated connecting element of the second set of elongated connecting elements 12 is arranged to interconnect the second frame 11 and the floater body 6 of the elongated buoyancy sleeve 5. Although in figure 3 the third net 26 is only partially shown, the person skilled in the art will appreciate that the third net 26 will have to completely cover any spaces between the second frame 11, the elongated connecting elements of the second set of elongated connecting elements 12 and the floater body 6 via which the stock in the cage 7 could escape.

Figure 3 also shows that the second frame 11 of the cage 7 comprises a second set of frame sections 20 that are connected to each other to form a second closed structure. The second frame 11 has buoyant properties and has a circular shape. The buoyant properties can be provided in any suitable way, for example by using a tubular lattice structure for the frame sections of the second set of frame sections 20 of the second frame 11. This is explained further in relation to figure 6.

Figure 4A shows a schematic perspective view of an exemplary, non-limiting embodiment of a detachable and pivotable coupling assembly 10. Figure 4B shows a schematic side view of the embodiment of the coupling assembly 10 shown in figure 4A. The coupling assembly 10 can be used to connect for example an elongated connecting element of the first set of elongated connecting elements 9 with the elongated buoyancy sleeve 5 of the bottom-founded semi-submersible spar-type fish farm 1 according to the invention. This is shown in figures 4A and 4B, wherein the first part 15 of the coupling assembly 10 is connected with a surface of the elongated buoyancy sleeve 5 that in use of the fish farm faces away from the elongated center column. The second part 16 of the coupling assembly 10 is arranged at an end part of an elongated connecting element of the first set of elongated connecting elements 9. The person skilled in the art will appreciate that an elongated connecting element of the second set of elongated connecting elements 12 can be connected with the floater body of the elongated buoyancy sleeve in the same way using the detachable and pivotable coupling assembly 10.

Figures 4A and 4B show that the detachable and pivotable coupling assembly 10 comprises a first part 15 and a second part 16 that are detachably connected via a first coupling element 17 that is arranged to provide a first pivot axis around which the first part 15 and the second part 16 are pivotable with respect to each other. When the detachable and pivotable coupling assembly 10 is used to connect an elongated connecting element of for example the first set of elongated connecting elements 9 with the elongated buoyancy sleeve 5, the first coupling element 17 allows the first part 15 and the second part 16 to move with respect to each other in radial directions of the elongated center column around which the elongated buoyancy sleeve is arranged. In figure 4B a gap D can be seen between the first part 15 of the coupling assembly 10 and the elongated connecting element of the first set of elongated connecting elements 9. The gap D enables the aforementioned movements of the first part 15 and the second part 16 with respect to each other. Likewise, an elongated connecting element of the second set of elongated connecting elements can be pivotable with respect to the floater body of the elongated buoyancy sleeve in radial directions of the elongated center column. The person skilled in the art will appreciate that the first coupling element 17 can be any suitable coupling element that can provide the first pivot axis that enables the abovementioned pivoting movements of the first part 15 and the second part 16 of the coupling assembly 10. The person skilled in the art will appreciate that the coupling assembly 10 can comprise more than one first parts and more than one second parts depending on the requirements for the bottom-founded semi-submersible spar-type offshore fish farm, e.g. for the sake of redundancy to improve reliability.

Moreover, figures 4A and 4B show an exemplary, non-limiting embodiment of the tubular lattice structure for the elongated connecting elements of the first set of elongated connecting elements 9. The person skilled in the art will appreciate that the elongated connecting elements of the second set of elongated connecting elements can have the same tubular lattice structure.

Figures 4A and 4B also show that the second part 16 of the coupling assembly 10 is provided with a second coupling element 18 that is arranged to provide a second pivot axis that is directed transversely with respect to the first pivot axis. The person skilled in the art will appreciate that by providing the second coupling element 18, an elongated connecting element of for example the first set of elongated connecting elements 9 can also be pivotable with respect to the elongated buoyancy sleeve 5 in circumferential directions of the elongated center column. Hence, an elongated connecting element of the first set of elongated connecting elements 9 can move with respect to the elongated buoyancy sleeve 5 in orthogonal directions, e.g. in radial directions and in circumferential directions of the elongated center column. The movements in radial and circumferential directions of the elongated center column can also be referred to as movements in pitch and yaw. These directions of movement are the most important directions regarding improvement of the life time of the connections between the elongated connecting elements of the first set of elongated connecting elements and at least one of the elongated buoyancy sleeve and the first frame. An analogous reasoning holds for the elongated connecting elements of the second set of elongated connecting elements that are pivotable with respect to at least one of the floater body of the elongated buoyancy sleeve and the second frame in both radial and circumferential directions of the elongated center column.

The person skilled in the art will appreciate that the second coupling element can be any suitable coupling element that can provide a second pivot axis that is directed transversely with respect to the first pivot axis and that enables the abovementioned movements of the elongated connecting elements of the first set of elongated connecting elements and at least one of the elongated buoyancy sleeve and the first frame, and the elongated connecting elements of the second set of elongated connecting elements and at least one of the floater body of the elongated buoyancy sleeve and the second frame.

Figures 4A and 4B show that the first part 15 and the second part 16 of the detachable and pivotable coupling assembly 10 are both provided with respective receiving elements, in this particular case holes that are configured and arranged to receive the first coupling element 17. In this way the first part 15 and the second part 16 of the coupling assembly 10 can be connected and detached. In this way maintenance of the bottom-founded fish farm can easily be done at the farming location. The person skilled in the art will appreciate that the coupling assembly 10 also allows easy disassembly of the semi-submersible netted cage.

In the embodiment of the coupling assembly 10 shown in figures 4A and 4B, the first coupling element 17 is an elongated pin that is configured and arranged to detachably connect the first part 15 and the second part 16 of the coupling assembly 10. The second coupling element 18 is a shaft that is configured and arranged to provide the second pivot axis that is directed transversely with respect to the first pivot axis. The person skilled in the art will appreciate that the respective first 17 and second 18 coupling elements can be any suitable components that provide the respective first and second pivot axes described above.

Figure 5 shows a schematic perspective view of an exemplary, non-limiting embodiment of a connection of two frame sections of a first set of frame sections 19 of the first frame of the semi-submersible netted rigid cage of the bottom-founded fish farm according to the invention. The two frame sections that have a tubular lattice structure to improve the buoyancy properties of the first frame are connected via a first connecting component 28 that also has a tubular lattice structure. Although not shown in the figures, the person skilled in the art will appreciate that the first connecting component 28 can be an integral part of an elongated connecting element of the first set of elongated connecting elements. Furthermore, although not shown in the figures, the person skilled in the art will appreciate that the first connecting element 28 can be provided with a first part of the coupling assembly that can be detachably connected with a second part of the coupling assembly that is connected with an end part of the elongated connecting element of the first set of connecting elements. The first connecting component 28 comprises a first flange 29 that is provided with a first hole 30 that is configured and arranged to receive an end part of an elongated connecting element of the third set of elongated connecting elements for interconnecting the first frame and the second frame of the semi-submersible netted rigid cage.

Figure 6 shows a schematic perspective view of an exemplary, non-limiting embodiment of a connection of two frame sections of a second set of frame sections 20 of the second frame of the semi-submersible netted rigid cage of the bottom-founded fish farm according to the invention. The two frame sections that have a tubular lattice structure to improve the buoyancy properties of the second frame are connected via a second connecting component 31 that also has a tubular lattice structure. Although not shown in the figures, the person skilled in the art will appreciate that the second connecting component 31 can be an integral part of an elongated connecting element of the second set of elongated connecting elements. Furthermore, although not shown in the figures, the person skilled in the art will appreciate that the second connecting element 31 can be provided with a first part of the coupling assembly that can be detachably connected with a second part of the coupling assembly that is connected with an end part of the elongated connecting element of the second set of connecting elements. The second connecting component 31 comprises a second flange 32 that is provided with a second hole 33 that is configured and arranged to receive an end part of an elongated connecting element of the third set of elongated connecting elements for interconnecting the first frame and the second frame of the semi-submersible netted rigid cage.

The present invention can be summarized as relating to a bottom-founded semi-submersible spar-type offshore fish farm 1 for cultivating fish at locations at sea where a seabed is located in a range of 25m - 50m below sea level, comprising an elongated center column 2 comprising a first end part 3 having a cross-section with a first diameter, and a second end part 4 having a cross-section with a second diameter that is larger than the first diameter, the second end part being provided with at least one fastening assembly for stably associating the second end part with the seabed at a farming location. Said fish farm also comprises an elongated buoyancy sleeve 5 that is coaxially arranged around the elongated center column and comprises a floater body 6 for stabilizing said fish farm during installation at the farming location. The invention also relates to a method of installing said fish farm at a farming location.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 1: bottom-founded semi-submersible spar-type offshore fish farm
- 2: elongated center column
- 3: first end part
- 4: second end part
- 5: elongated buoyancy sleeve
- 6: floater body
- 7: semi-submersible netted rigid cage
- 8: first frame
- 9: first set of elongated connecting elements
- 10: detachable and pivotable coupling assembly
- 11: second frame
- 12: second set of elongated connecting elements
- 13: sea level
- 14: third set of elongated connecting elements
- 15: first part of the detachable and pivotable coupling assembly
- 16: second part of the detachable and pivotable coupling assembly
- 17: first coupling element
- 18: second coupling element
- 19: first set of frame sections
- 20: second set of frame sections
- 21: control facility
- 22: first platform
- 23: second platform
- 24: first net
- 25: second net
- 26: third net
- 27: seabed
- 28: first connecting component
- 29: first flange
- 30: first hole
- 31: second connecting component
- 32: second flange
- 33: second hole
- 34: fastening assembly
- 35: suction can

## Claims

1. A bottom-founded semi-submersible spar-type offshore fish farm (1) for cultivating fish at locations at sea where a seabed is located in a range of 25m - 50m below sea level, comprising:
- an elongated center column (2) comprising a first end part (3) having a cross-section with a first diameter, and a second end part (4) having a cross-section with a second diameter that is larger than the first diameter of the cross-section of the first end part, the second end part (4) being provided with at least one fastening assembly (34) that is configured and arranged to bring the second end part (4) of the elongated center column (2) into abutting contact with the seabed at a farming location;
- an elongated buoyancy sleeve (5) that is coaxially arranged around the elongated center column (2), the elongated buoyancy sleeve (5) comprising an end portion that is provided with a floater body (6) that is configured and arranged to extend radially outward with respect to the elongated center column (2) and to stabilize said fish farm (1) upon movement of the elongated center column (2) and the elongated buoyancy sleeve (5) relative to each other during installation of said fish farm (1) at the farming location.

2. The bottom-founded semi-submersible spar-type offshore fish farm (1) according to claim 1, wherein at least one of the elongated center column (2), the elongated buoyancy sleeve (5) and the floater body (5) are configured to allow the floater body to either assume a predetermined position along the elongated center column (2) between the first end part (3) and the second end part (4) thereof or to be in an abutting contact with the second end part (4) of the elongated center column (2) depending on a mode of operation of said fish farm (1).

3. The bottom-founded semi-submersible spar-type offshore fish farm (1) according to claim 1 or 2, comprising a semi-submersible netted rigid cage (7) that is coaxially arranged around the elongated buoyancy sleeve (5), said cage (7) comprising:
- a first frame (8) that is coaxially arranged around the elongated buoyancy sleeve (5);
- a first set of elongated connecting elements (9), wherein each elongated connecting element of the first set of elongated connecting elements (9) is arranged to interconnect the first frame (8) and the elongated buoyancy sleeve (5) via at least one detachable and pivotable coupling assembly (10);
- a second frame (11) that is coaxially arranged around the elongated buoyancy sleeve (5) and, in use of said fish farm (1), is arranged below the first frame (8);
- a second set of elongated connecting elements (12), wherein each elongated connecting element of the second set of elongated connecting elements (12) is arranged to interconnect the second frame (11) and the floater body (6) of the elongated buoyancy sleeve (5); and
- a third set of elongated connecting elements (14), wherein each elongated connecting element of the third set of elongated connecting elements (14) is arranged to interconnect the first frame (8) and the second frame (11).

4. The bottom-founded semi-submersible spar-type offshore fish farm (1) according to claim 3, wherein the detachable and pivotable coupling assembly (10) comprises a first part (15) and a second part (16) that are detachably connectable via at least a first coupling element (17) that is arranged to provide a first pivot axis around which the first part (15) and the second part (16) are pivotable with respect to each other.

5. The bottom-founded semi-submersible spar-type offshore fish farm (1) according to claim 4, wherein at least one of the first part (15) and the second part (16) of the detachable and pivotable coupling assembly (10) is provided with at least a second coupling element (18) that is arranged to provide a second pivot axis that is directed transversely with respect to the first pivot axis.

6. The bottom-founded semi-submersible spar-type offshore fish farm (1) according to any one of the claims 3 to 5, wherein at least one of the first frame (8) comprises a first set of frame sections (19) that are connected to each other to form a first closed structure and the second frame (11) comprises a second set of frame sections (20) that are connected to each other to form a second closed structure.

7. The bottom-founded semi-submersible spar-type offshore fish farm (1) according to any one of the claims 3 to 6, wherein at least one of the first frame (8) and the second frame (11) have buoyant properties and have one of a circular and polygonal shape.

8. The bottom-founded semi-submersible spar-type offshore fish farm (1) according to any one of the claims 4 to 7, wherein the first part (15) of the detachable and pivotable coupling assembly (10) is arranged at least at one of a surface of the elongated buoyancy sleeve (5) that in use of said fish farm faces away from the elongated center column (2), and a surface of at least one frame section of the first set of frame sections (19) of the first frame (8).

9. The bottom-founded semi-submersible spar-type offshore fish farm (1) according to any one of the claims 4 to 8, wherein the second part (16) of the detachable and pivotable coupling assembly (10) is arranged at least at one end part of an elongated connecting element of the first set of elongated connecting elements (9).

10. The bottom-founded semi-submersible spar-type offshore fish farm (1) according to any one of the claims 3 to 9, wherein the elongated connecting elements of at least one of the first set of elongated connecting elements (9) and the second set of elongated connecting elements (12) have a tubular lattice structure.

11. The bottom-founded semi-submersible spar-type offshore fish farm (1) according to any one of the preceding claims 3 to 10, wherein said fish farm (1) is provided with at least one of a first platform (22) that, in use of said fish farm (1), is arranged adjacent to the elongated center column (2) and a second platform (23) that is connected with the first frame (8).

12. The bottom-founded semi-submersible spar-type offshore fish farm (1) according to any one of the preceding claims 3 to 11, wherein the first frame (8) is provided with a first net (24) that, in use of said fish farm (1), provides a top net of the semi-submersible netted rigid cage (7), the first frame (8) and the second frame (11) are further interconnected via a second net (25) that, in use of said fish farm (1), provides a circumferential side net of said cage (7), and wherein the second frame (11) is provided with a third net (26) that, in use of said fish farm (1), provides a bottom net of said cage (7).

13. The bottom-founded semi-submersible spar-type offshore fish farm (1) according to any one of the preceding claims, wherein the at least one fastening assembly (34) comprises at least one of a suction anchor (35) and a pre-piling template.

14. The bottom-founded semi-submersible spar-type offshore fish farm (1) according to any one of the preceding claims, wherein the semi-submersible spar-type offshore fish farm (1) comprises at least one of a harvest system, a power system, a mooring system, a boat landing system, a docking system, a dead fish removal system and a feeding system.

15. A method of installing a bottom-founded semi-submersible spar-type offshore fish farm (1) for cultivating fish at locations where a seabed is located in a range of 25m - 50m below sea level according to any one of the preceding claims, comprising the steps of:
- positioning said fish farm (1) of which the floater body (6) of the elongated buoyancy sleeve (5) and the second end part (4) of the elongated center column (2) are in an abutting contact at a farming location;
- moving the elongated center column (2) and the elongated buoyancy sleeve (5) relative to each other to bring the second end part (4) of the elongated center column (2) into abutting contact with the seabed at the farming location;
- associating the second end part (4) of the elongated center column (2) with the seabed at the farming location using at least one fastening assembly (34); and
wherein during the steps of bringing the second end part (4) of the elongated center column (2) into abutting contact with the seabed and associating the second end part (4) with the seabed, the floater body (6) remains located at sea level to stabilize said fish farm (1).

## Patentansprüche

1. Am Boden fundamentierte, halbtauchfähige Offshore-Fischfarm (1) vom Holm-Typ zum Kultivieren von Fischen an Standorten im Meer, wo sich ein Meeresboden in einem Bereich von 25 m - 50 m unter Meereshöhe befindet, umfassend:
- eine längliche Mittelsäule (2), umfassend ein erstes Endteil (3) mit einem Querschnitt mit einem ersten Durchmesser und ein zweites Endteil (4) mit einem Querschnitt mit einem zweiten Durchmesser, der größer ist als der erste Durchmesser des Querschnitts des ersten Endteils, wobei das zweite Endteil (4) mit mindestens einer Befestigungsanordnung (34) versehen ist, die konfiguriert und angeordnet ist, um an einem Zuchtstandort das zweite Endteil (4) der länglichen Mittelsäule (2) in Stoßkontakt mit dem Meeresboden zu bringen;
- eine längliche Auftriebshülse (5), die koaxial um die längliche Mittelsäule (2) herum angeordnet ist, wobei die längliche Auftriebshülse (5) einen Endabschnitt umfasst, der mit einem Schwimmerkörper (6) versehen ist, der konfiguriert und angeordnet ist, um sich in Bezug auf die längliche Mittelsäule (2) radial nach außen zu erstrecken und die Fischfarm (1) bei Bewegung der länglichen Mittelsäule (2) und der länglichen Auftriebshülse (5) relativ zueinander während Installation der Fischfarm (1) an dem Zuchtstandort zu stabilisieren.

2. Am Boden fundamentierte, halbtauchfähige Offshore-Fischfarm (1) vom Holm-Typ nach Anspruch 1, wobei mindestens eines von der länglichen Mittelsäule (2), der länglichen Auftriebshülse (5) und dem Schwimmerkörper (5) konfiguriert sind, um dem Schwimmerkörper zu ermöglichen, in Abhängigkeit von einem Betriebsmodus der Fischfarm (1) entweder eine vorbestimmte Position entlang der länglichen Mittelsäule (2) zwischen dem ersten Endteil (3) und dem zweiten Endteil (4) davon einzunehmen oder in einem Stoßkontakt mit dem zweiten Endteil (4) der länglichen Mittelsäule (2) vorzuliegen.

3. Am Boden fundamentierte, halbtauchfähige Offshore-Fischfarm (1) vom Holm-Typ nach Anspruch 1 oder 2, umfassend einen halbtauchfähigen netzartigen starren Käfig (7), der koaxial um die längliche Auftriebshülse (5) herum angeordnet ist, wobei der Käfig (7) umfasst:
- einen ersten Rahmen (8), der koaxial um die längliche Auftriebshülse (5) herum angeordnet ist;
- einen ersten Satz von länglichen Verbindungselementen (9), wobei jedes längliche Verbindungselement des ersten Satzes von länglichen Verbindungselementen (9) angeordnet ist, um den ersten Rahmen (8) und die längliche Auftriebshülse (5) über mindestens eine abnehmbare und schwenkbare Kopplungsanordnung (10) miteinander zu verbinden;
- einen zweiten Rahmen (11), der koaxial um die längliche Auftriebshülse (5) herum angeordnet ist und bei Verwendung der Fischfarm (1) unter dem ersten Rahmen (8) angeordnet ist;
- einen zweiten Satz von länglichen Verbindungselementen (12), wobei jedes längliche Verbindungselement des zweiten Satzes von länglichen Verbindungselementen (12) angeordnet ist, um den zweiten Rahmen (11) und den Schwimmerkörper (6) der länglichen Auftriebshülse (5) miteinander zu verbinden; und
- einen dritten Satz von länglichen Verbindungselementen (14), wobei jedes längliche Verbindungselement des dritten Satzes von länglichen Verbindungselementen (14) angeordnet ist, um den ersten Rahmen (8) und den zweiten Rahmen (11) miteinander zu verbinden.

4. Am Boden fundamentierte, halbtauchfähige Offshore-Fischfarm (1) vom Holm-Typ nach Anspruch 3, wobei die abnehmbare und schwenkbare Kopplungsanordnung (10) ein erstes Teil (15) und ein zweites Teil (16) umfasst, die über mindestens ein erstes Kopplungselement (17) abnehmbar verbindbar sind, das angeordnet ist, um eine erste Schwenkachse bereitzustellen, um die herum das erste Teil (15) und das zweite Teil (16) in Bezug aufeinander schwenkbar sind.

5. Am Boden fundamentierte, halbtauchfähige Offshore-Fischfarm (1) vom Holm-Typ nach Anspruch 4, wobei mindestens eines des ersten Teils (15) und des zweiten Teils (16) der abnehmbaren und schwenkbaren Kopplungsanordnung (10) mit mindestens einem zweiten Kopplungselement (18) versehen ist, das angeordnet ist, um eine zweite Schwenkachse bereitzustellen, die in Bezug auf die erste Schwenkachse quer gerichtet ist.

6. Am Boden fundamentierte, halbtauchfähige Offshore-Fischfarm (1) vom Holm-Typ nach einem der Ansprüche 3 bis 5, wobei mindestens einer des ersten Rahmens (8) einen ersten Satz von Rahmensektionen (19) umfasst, die miteinander verbunden sind, um eine erste geschlossene Struktur zu bilden, und der zweite Rahmen (11) einen zweiten Satz von Rahmensektionen (20) umfasst, die miteinander verbunden sind, um eine zweite geschlossene Struktur zu bilden.

7. Am Boden fundamentierte, halbtauchfähige Offshore-Fischfarm (1) vom Holm-Typ nach einem der Ansprüche 3 bis 6, wobei mindestens einer des ersten Rahmens (8) und des zweiten Rahmens (11) Auftriebseigenschaften aufweisen und eine von einer kreisförmigen und polygonalen Form aufweisen.

8. Am Boden fundamentierte, halbtauchfähige Offshore-Fischfarm (1) vom Holm-Typ nach einem der Ansprüche 4 bis 7, wobei das erste Teil (15) der abnehmbaren und schwenkbaren Kopplungsanordnung (10) mindestens an einer von einer Oberfläche der länglichen Auftriebshülse (5), die bei Verwendung der Fischfarm von der länglichen Mittelsäule (2) weg weist, und einer Oberfläche mindestens einer Rahmensektion des ersten Satzes von Rahmensektionen (19) des ersten Rahmens (8) angeordnet ist.

9. Am Boden fundamentierte, halbtauchfähige Offshore-Fischfarm (1) vom Holm-Typ nach einem der Ansprüche 4 bis 8, wobei das zweite Teil (16) der abnehmbaren und schwenkbaren Kopplungsanordnung (10) mindestens an einem Endteil eines länglichen Verbindungselements des ersten Satzes von länglichen Verbindungselementen (9) angeordnet ist.

10. Am Boden fundamentierte, halbtauchfähige Offshore-Fischfarm (1) vom Holm-Typ nach einem der Ansprüche 3 bis 9, wobei die länglichen Verbindungselemente mindestens eines von dem ersten Satz von länglichen Verbindungselementen (9) und dem zweiten Satz von länglichen Verbindungselementen (12) eine röhrenförmige Gitterstruktur aufweisen.

11. Am Boden fundamentierte, halbtauchfähige Offshore-Fischfarm (1) vom Holm-Typ nach einem der vorstehenden Ansprüche 3 bis 10, wobei die Fischfarm (1) mit mindestens einer von einer ersten Plattform (22), die bei Verwendung der Fischfarm (1) angrenzend an die längliche Mittelsäule (2) angeordnet ist, und einer zweiten Plattform (23), die mit dem ersten Rahmen (8) verbunden ist, angeordnet ist.

12. Am Boden fundamentierte, halbtauchfähige Offshore-Fischfarm (1) vom Holm-Typ nach einem der vorstehenden Ansprüche 3 bis 11, wobei der erste Rahmen (8) mit einem ersten Netz (24) versehen ist, das bei Verwendung der Fischfarm (1) ein oberes Netz des halbtauchfähigen netzartigen starren Käfigs (7) bereitstellt, wobei der erste Rahmen (8) und der zweite Rahmen (11) über ein zweites Netz (25) weiter miteinander verbunden sind, das bei Verwendung der Fischfarm (1) ein umfangsseitiges Netz des Käfigs (7) bereitstellt, und wobei der zweite Rahmen (11) mit einem dritten Netz (26) versehen ist, das bei Verwendung der Fischfarm (1) ein Bodennetz des Käfigs (7) bereitstellt.

13. Am Boden fundamentierte, halbtauchfähige Offshore-Fischfarm (1) vom Holm-Typ nach einem der vorstehenden Ansprüche, wobei die mindestens eine Befestigungsanordnung (34) mindestens eines von einem Sauganker (35) und einer Vorrammschablone umfasst.

14. Am Boden fundamentierte, halbtauchfähige Offshore-Fischfarm (1) vom Holm-Typ nach einem der vorstehenden Ansprüche, wobei die halbtauchfähige Offshore-Fischfarm (1) vom Holm-Typ mindestens eines von einem Erntesystem, einem Stromversorgungssystem, einem Verankerungssystem, einem Bootanlegesystem, einem Andocksystem, einem System zur Entfernung toter Fische und einem Fütterungssystem umfasst.

15. Verfahren zum Installieren einer am Boden fundamentierten, halbtauchfähigen Offshore-Fischfarm (1) vom Holm-Typ zum Kultivieren von Fischen an Standorten, an denen sich ein Meeresboden in einem Bereich von 25 m - 50 m unter Meereshöhe befindet, nach einem der vorstehenden Ansprüche, umfassend die Schritte:
- Positionieren der Fischfarm (1), deren Schwimmerkörper (6) der länglichen Auftriebshülse (5) und das zweite Endteil (4) der länglichen Mittelsäule (2) an einem Zuchtstandort in einem Stoßkontakt vorliegen;
- Bewegen der länglichen Mittelsäule (2) und der längliche Auftriebshülse (5) relativ zueinander, um an dem Zuchtstandort das zweite Endteil (4) der länglichen Mittelsäule (2) in Stoßkontakt mit dem Meeresboden zu bringen;
- Assoziieren des zweiten Endteils (4) der länglichen Mittelsäule (2) mit dem Meeresboden an dem Zuchtstandort unter Verwendung mindestens einer Befestigungsanordnung (34); und
wobei während der Schritte des Instoßkontaktbringens des zweiten Endteils (4) der länglichen Mittelsäule (2) mit dem Meeresboden und Assoziierens des zweiten Endteils (4) mit dem Meeresboden der Schwimmerkörper (6) auf Meereshöhe befindlich bleibt, um die Fischfarm (1) zu stabilisieren.

## Revendications

1. Ferme piscicole en mer semi-submersible de type espar établie sur le fond (1) pour élever des poissons à des emplacements à la mer où un fond marin se situe dans une plage de 25 m à 50 m en dessous du niveau de la mer, comprenant :
- une colonne centrale allongée (2) comprenant une première partie d'extrémité (3) ayant une coupe transversale avec un premier diamètre, et une deuxième partie d'extrémité (4) ayant une coupe transversale avec un deuxième diamètre qui est plus grand que le premier diamètre de la coupe transversale de la première partie d'extrémité, la deuxième partie d'extrémité (4) étant pourvue d'au moins un ensemble de fixation (34) qui est configuré et agencé pour amener la deuxième partie d'extrémité (4) de la colonne centrale allongée (2) en contact en butée avec le fond marin au niveau d'un emplacement d'élevage ;
- un manchon de flottabilité allongé (5) qui est agencé coaxialement autour de la colonne centrale allongée (2), le manchon de flottabilité allongé (5) comprenant une portion d'extrémité qui est pourvue d'un corps de flotteur (6) qui est configuré et agencé pour s'étendre radialement vers l'extérieur par rapport à la colonne centrale allongée (2) et pour stabiliser ladite ferme piscicole (1) lors d'un mouvement de la colonne centrale allongée (2) et du manchon de flottabilité allongé (5) l'un par rapport à l'autre pendant l'installation de ladite ferme piscicole (1) au niveau de l'emplacement d'élevage.

2. Ferme piscicole en mer semi-submersible de type espar établie sur le fond (1) selon la revendication 1, dans laquelle au moins un parmi la colonne centrale allongée (2), le manchon de flottabilité allongé (5) et le corps de flotteur (5) sont configurés pour permettre au corps de flotteur soit de prendre une position prédéterminée le long de la colonne centrale allongée (2) entre la première partie d'extrémité (3) et la deuxième partie d'extrémité (4) de celui-ci soit d'être dans un contact en butée avec la deuxième partie d'extrémité (4) de la colonne centrale allongée (2) en fonction d'un mode de fonctionnement de ladite ferme piscicole (1).

3. Ferme piscicole en mer semi-submersible de type espar établie sur le fond (1) selon la revendication 1 ou 2, comprenant une cage rigide en filet semi-submersible (7) qui est agencée coaxialement autour du manchon de flottabilité allongé (5), ladite cage (7) comprenant :
- un premier cadre (8) qui est agencé coaxialement autour du manchon de flottabilité allongé (5) ;
- un premier ensemble d'éléments de connexion allongés (9), dans laquelle chaque élément de connexion allongé du premier ensemble d'éléments de connexion allongés (9) est agencé pour interconnecter le premier cadre (8) et le manchon de flottabilité allongé (5) par l'intermédiaire d'au moins un ensemble d'accouplement détachable et pivotant (10) ;
- un deuxième cadre (11) qui est agencé coaxialement autour du manchon de flottabilité allongé (5) et, en cours d'utilisation de ladite ferme piscicole (1), est agencé en dessous du premier cadre (8) ;
- un deuxième ensemble d'éléments de connexion allongés (12), dans laquelle chaque élément de connexion allongé du deuxième ensemble d'éléments de connexion allongés (12) est agencé pour interconnecter le deuxième cadre (11) et le corps de flotteur (6) du manchon de flottabilité allongé (5) ; et
- un troisième ensemble d'éléments de connexion allongés (14), dans laquelle chaque élément de connexion allongé du troisième ensemble d'éléments de connexion allongés (14) est agencé pour interconnecter le premier cadre (8) et le deuxième cadre (11).

4. Ferme piscicole en mer semi-submersible de type espar établie sur le fond (1) selon la revendication 3, dans laquelle l'ensemble d'accouplement détachable et pivotant (10) comprend une première partie (15) et une deuxième partie (16) qui peuvent être connectées de façon détachable par l'intermédiaire d'au moins un premier élément d'accouplement (17) qui est agencé pour fournir un premier axe de pivotement autour duquel la première partie (15) et la deuxième partie (16) peuvent pivoter l'une par rapport à l'autre.

5. Ferme piscicole en mer semi-submersible de type espar établie sur le fond (1) selon la revendication 4, dans laquelle au moins une de la première partie (15) et de la deuxième partie (16) de l'ensemble d'accouplement détachable et pivotant (10) est pourvue d'au moins un deuxième élément d'accouplement (18) qui est agencé pour fournir un deuxième axe de pivotement qui est dirigé transversalement par rapport au premier axe de pivotement.

6. Ferme piscicole en mer semi-submersible de type espar établie sur le fond (1) selon l'une quelconque des revendications 3 à 5, dans laquelle au moins un parmi le premier cadre (8) comprend un premier ensemble de sections de cadre (19) qui sont connectées les unes aux autres pour former une première structure fermée et le deuxième cadre (11) comprend un deuxième ensemble de sections de cadre (20) qui sont connectées les unes aux autres pour former une deuxième structure fermée.

7. Ferme piscicole en mer semi-submersible de type espar établie sur le fond (1) selon l'une quelconque des revendications 3 à 6, dans laquelle au moins un parmi le premier cadre (8) et le deuxième cadre (11) ont des propriétés de flottabilité et ont une parmi une forme circulaire et polygonale.

8. Ferme piscicole en mer semi-submersible de type espar établie sur le fond (1) selon l'une quelconque des revendications 4 à 7, dans laquelle la première partie (15) de l'ensemble d'accouplement détachable et pivotant (10) est agencée au moins au niveau d'une parmi une surface du manchon de flottabilité allongé (5) qui en cours d'utilisation de ladite ferme piscicole fait face à l'écart de la colonne centrale allongée (2), et une surface d'au moins une section de cadre du premier ensemble de sections de cadre (19) du premier cadre (8).

9. Ferme piscicole en mer semi-submersible de type espar établie sur le fond (1) selon l'une quelconque des revendications 4 à 8, dans laquelle la deuxième partie (16) de l'ensemble d'accouplement détachable et pivotant (10) est agencée au moins au niveau d'une partie d'extrémité d'un élément de connexion allongé du premier ensemble d'éléments de connexion allongés (9).

10. Ferme piscicole en mer semi-submersible de type espar établie sur le fond (1) selon l'une quelconque des revendications 3 à 9, dans laquelle les éléments de connexion allongés d'au moins un parmi le premier ensemble d'éléments de liaison allongés (9) et le deuxième ensemble d'éléments de connexion allongés (12) ont une structure en treillis tubulaire.

11. Ferme piscicole en mer semi-submersible de type espar établie sur le fond (1) selon l'une quelconque des revendications 3 à 10 précédentes, dans laquelle ladite ferme piscicole (1) est pourvue d'au moins une parmi une première plate-forme (22) qui, en cours d'utilisation de ladite ferme piscicole (1), est agencée adjacente à la colonne centrale allongée (2) et une deuxième plate-forme (23) qui est connectée au premier cadre (8).

12. Ferme piscicole en mer semi-submersible de type espar établie sur le fond (1) selon l'une quelconque des revendications 3 à 11 précédentes, dans laquelle le premier cadre (8) est pourvu d'un premier filet (24) qui, en cours d'utilisation de ladite ferme piscicole (1), fournit un filet supérieur de la cage rigide en filet semi-submersible (7), le premier cadre (8) et le deuxième cadre (11) sont en outre interconnectés par l'intermédiaire d'un deuxième filet (25) qui, en cours d'utilisation de ladite ferme piscicole (1), fournit un filet latéral circonférentiel de ladite cage (7), et dans laquelle le deuxième cadre (11) est pourvu d'un troisième filet (26) qui, en cours d'utilisation de ladite ferme piscicole (1), fournit un filet inférieur de ladite cage (7).

13. Ferme piscicole en mer semi-submersible de type espar établie sur le fond (1) selon l'une quelconque des revendications précédentes, dans laquelle l'au moins un ensemble de fixation (34) comprend au moins un parmi une ancre à aspiration (35) et un gabarit de pré-battage de pieu.

14. Ferme piscicole en mer semi-submersible de type espar établie sur le fond (1) selon l'une quelconque des revendications précédentes, dans laquelle la ferme piscicole en mer semi-submersible de type espar (1) comprend au moins un parmi un système de récolte, un système de puissance, un système d'amarrage, un système d'accostage de bateau, un système d'arrimage, un système de retrait de poissons morts et un système d'alimentation.

15. Procédé d'installation d'une ferme piscicole en mer semi-submersible de type espar établie sur le fond (1) pour élever des poissons à des emplacements où un fond marin se situe dans une plage de 25 m à 50 m en dessous du niveau de la mer selon l'une quelconque des revendications précédentes, comprenant les étapes consistant à :
- positionner ladite ferme piscicole (1) dont le corps de flotteur (6) du manchon de flottabilité allongé (5) et la deuxième partie d'extrémité (4) de la colonne centrale allongée (2) sont dans un contact en butée au niveau d'un emplacement d'élevage ;
- déplacer la colonne centrale allongée (2) et le manchon de flottabilité allongé (5) l'un par rapport à l'autre pour amener la deuxième partie d'extrémité (4) de la colonne centrale allongée (2) en contact en butée avec le fond marin au niveau de l'emplacement d'élevage ;
- associer la deuxième partie d'extrémité (4) de la colonne centrale allongée (2) au fond marin au niveau de l'emplacement d'élevage en utilisant au moins un ensemble de fixation (34) ; et
dans lequel pendant les étapes consistant à amener la deuxième partie d'extrémité (4) de la colonne centrale allongée (2) en contact en butée avec le fond marin et à associer la deuxième partie d'extrémité (4) au fond marin, le corps de flotteur (6) demeure situé au niveau de la mer pour stabiliser ladite ferme piscicole (1).
